# EUROPEAN PATENT APPLICATION

(11) **EP 4 316 232 A1**
(43) Date of publication of application: **07.02.2024**
(21) Application number: 23186655.9
(22) Date of filing: 20.07.2023
(51) Int. Cl.: A01D 34/00

(54) **MOWING DEVICE**

(30) Priority: 04.08.2022 CN 202222047955 U
(71) Applicant: Suzhou Cleva Precision Machinery & Technology Co., Ltd., Suzhou, Jiangsu 215000 (CN); Skybest Electric Appliance (Suzhou) Co., Ltd., Suzhou, Jiangsu 215000 (CN)
(72) Inventor: WANG, Cong, Suzhou, 215000 (CN); ZHANG, Chen, Suzhou, 215000 (CN)
(74) Representative: Murgitroyd & Company

(57) **Abstract**

Disclosed is a mowing device. The mowing device includes a mower (1) and a camera (2), the camera (2) is located at the front part of the mower (1) in the forward direction, and the camera (2) includes a lens (3); and a vertical line is made from the center of the lens (3) to a traveling surface of the mower, the vertical line and the traveling surface intersect at a first intersection (0), a horizontal axis is established with the first intersection as an origin and the forward direction of the mower along the traveling surface as a positive direction, a central axis of the lens and the horizontal axis intersect at a second intersection (A), and the second intersection (A) is in the positive direction of the horizontal axis or coincides with the first intersection. The mower is enabled to obtain an appropriate field of view so as to make corresponding work determinations, and a size and manufacturing costs of the mower can be reduced.

## Description

### Technical Field

The present invention relates to the field of mowers, in particular to a mowing device.

### Background Art

An existing mower needs a camera to capture photos to identify whether the mower is currently inside a lawn, and then makes corresponding actions according to the captured photos. The existing camera is generally placed horizontally. In order to obtain a better field of view, the camera needs to be mounted at the rear and high position of the mower, which increases the size of the mower and increases manufacturing costs.

### Summary

The technical problem to be solved by the present invention is to provide a mowing device, which can enable a mower to obtain an appropriate field of view so as to make corresponding work determinations, and can also reduce a size and manufacturing costs of the mower.

In order to solve the above technical problem, the present invention provides a mowing device, the mowing device includes a mower and a camera, the camera is located at the front part of the mower in the forward direction, and the camera includes a lens; and
a vertical line is made from the center of the lens to a traveling surface of the mower, the vertical line and the traveling surface intersect at a first intersection, a horizontal axis is established with the first intersection as an origin and the forward direction of the mower along the traveling surface as a positive direction, a central axis of the lens and the horizontal axis intersect at a second intersection, and the second intersection is in the positive direction of the horizontal axis or coincides with the first intersection.

In a feasible implementation, the camera is rotatable or remains fixed relative to the mower.

In a feasible implementation, a field of view of the lens of the camera has a field angle β in a vertical direction, side lines of the field angle β are constituted by a first field-of-view boundary and a second field-of-view boundary, and the second field-of-view boundary is closer to the mower than the first field-of-view boundary; and
the second field-of-view boundary and the horizontal axis intersect at a third intersection, and when the third intersection is in the positive direction of the horizontal axis, there is a distance between the first intersection and the third intersection.

In a feasible implementation, the distance is between 0 mm and 500 mm.

In a feasible implementation, the mowing device further includes a camera mounting structure, and the camera is connected with the mower by the camera mounting structure.

In a feasible implementation, the mower includes a mower housing and a controller, and the controller is disposed in the mower housing and is capable of controlling rotation of the camera.

In a feasible implementation, a battery pack is further disposed in the mower housing, and the battery pack is located at the rear part of the mower in the forward direction and is used for providing a power source for the mower.

In a feasible implementation, the mower further includes a motor and a mowing blade, the motor is disposed in the mower housing, the mowing blade is disposed at the bottom of the mower, and the motor is used for driving the mowing blade to rotate.

In a feasible implementation, the mower further includes a driving traveling wheel and a driven traveling wheel, the driving traveling wheel is located at the rear part of the mower in the forward direction, the driven traveling wheel is located at the front part of the mower in the forward direction, and under a driving action of the driving traveling wheel, the mower travels on the traveling surface and drives the driven traveling wheel to rotate. The implementation of the present invention achieves the following beneficial effects:
According to the mowing device provided in the present application, the camera conventionally highly disposed at the rear part of the mower in the forward direction is disposed at the front part of the mower in the forward direction, which can reduce the size of the mower and enables the mower to obtain a better field of view. In addition, the central axis of the lens of the camera and the horizontal axis where the forward direction of the mower is located intersect at the second intersection, the second intersection is in the positive direction of the horizontal axis or coincides with the first intersection, and compared with the situation that the camera is disposed horizontally at the rear part of the mower and the camera cannot rotate or the camera can rotate at any angle, the camera in the present application can rotate a specific angle range, such that the camera can capture, within the angle range, photo information that the mower needs to obtain when working, other unnecessary information in photos is reduced, and the more accurate photo information can reduce operation steps of the mower when processing photos, reduce operation costs, and facilitate the mower to make corresponding actions in time.

It should be understood that the above general descriptions and the following detailed descriptions are exemplary and explanatory only, and are not intended to limit the present application.

### Brief Description of the Drawings

Accompanying drawings herein are incorporated into the description and constitute a part of the description, show embodiments in accordance with the present application, are used to explain the principle of the present application together with the description, and do not constitute improper limitations to the present application.
FIG. 1 is a schematic structural diagram of a mowing device according to the present invention;
FIG. 2 is a side view of a mowing device according to the present invention;
FIG. 3 is a simplified schematic diagram of a position of a lens according to the present invention;
FIG. 4 is a simplified schematic diagram of a position of a lens according to the present invention; and
FIG. 5 is a simplified schematic diagram of a position of a lens according to the present invention.

Reference numerals in the drawings: 1 - mower, 2 - camera, 3 - lens, 4 - camera mounting structure, 5 - mower housing, 6 - controller, 7 - battery pack, 8 - motor, 9 - mowing blade, 10 - driving traveling wheel, and 11 - driven traveling wheel.

### Detailed Description of the Embodiments

In order to make the above objectives, features and advantages of the present invention more obvious and understandable, specific embodiments of the present invention will be described in detail below with reference to the accompanying drawings. Many specific details are described in the following description to fully understand the present invention. However, the present invention can be implemented in many ways different from those described herein. Those skilled in the art can make similar improvements without violating the content of the present invention. Therefore, the present invention is not limited by the specific embodiments disclosed below.

It should be noted that when one element is referred to as being "fixed" to other element, the element may be directly located on the other element or a medium element may exist. When one element is considered to be "connected" to other element, the element may be directly connected to the other element or a medium element may exist simultaneously. The terms "vertical", "horizontal", "left", "right" and the like used herein are only for the purpose of illustration.

Unless otherwise defined, all technological and scientific terms used herein have the same meanings as commonly understood by those skilled in the technical field of the present invention. The terms used in the description of the present invention are only for the purpose of describing specific embodiments, but are not intended to limit the present invention. The term "and/or" used herein includes any and all combinations of one or more relevant listed items.

In the prior art, a mower needs a camera to capture photos to identify whether a body is currently inside a lawn, and makes corresponding actions according to the photos captured by the camera. The existing camera is generally placed horizontally, and is mounted at the rear and high position of the body, which increases the size of the mower and increases manufacturing costs.

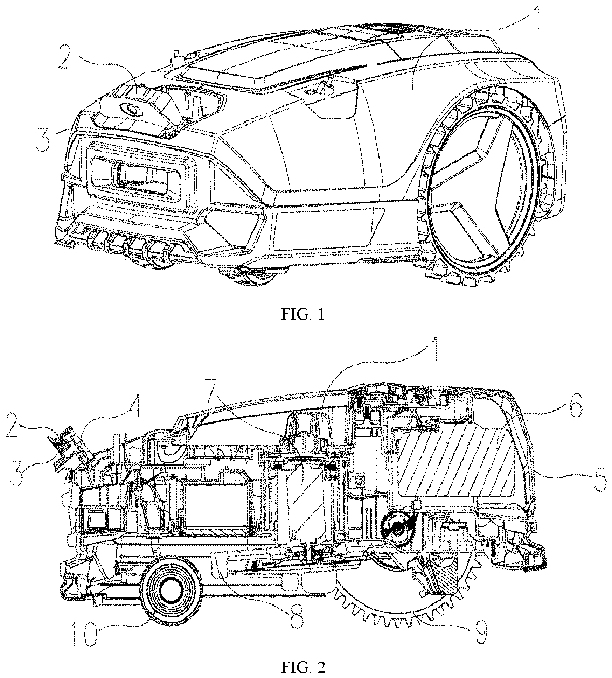

As shown in FIGs. 1 and 2, this embodiment provides a mowing device. The mowing device includes a mower 1 and a camera 2, where the camera 2 is located at the front part of the mower 1 in the forward direction. In a possible implementation, the camera 2 may be disposed on the mower 1, or connected to the mower 1 by a camera mounting structure 4, as long as the camera 2 can remain stable relative to the front part of the mower 1 in the forward direction and will not fall to affect a normal operation of the mower 1. The camera 2 conventionally highly disposed at the rear part of the mower 1 in the forward direction is disposed at the front part of the mower 1 in the forward direction, which can reduce the size of the mower 1 and enables the mower 1 to obtain a better field of view.

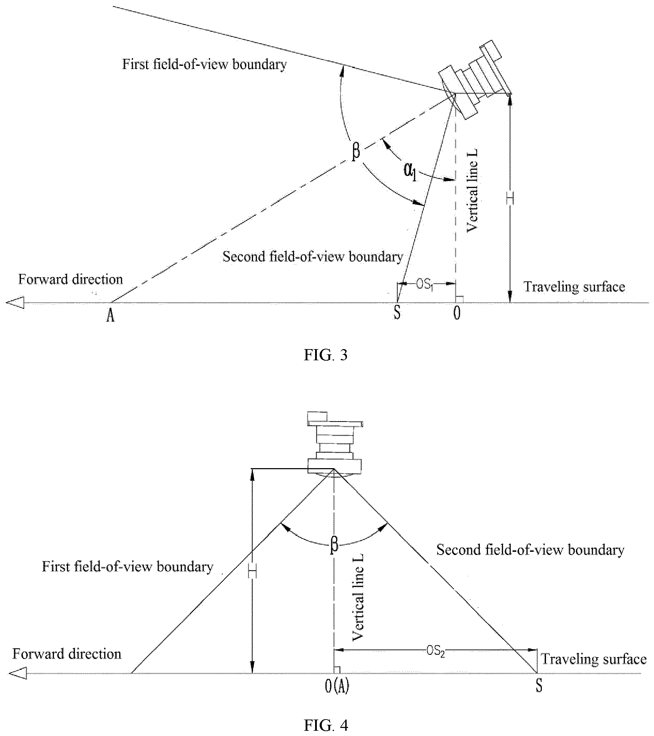

As shown in FIG. 2 and FIG. 3, the camera 2 includes a lens 3, a vertical line is made from the center of the lens 3 to a traveling surface of the mower 1, the vertical line and the traveling surface intersect at a first intersection, a horizontal axis is established with the first intersection as an origin and the forward direction of the mower 1 along the traveling surface as a positive direction, a central axis of the lens 3 and the horizontal axis intersect at a second intersection, and the second intersection is in the positive direction of the horizontal axis or coincides with the first intersection. It should be noted here that the traveling surface may be the ground, a plane or curved surface of grass growth, or the like. When the mower 1 is working, the camera 2 captures photos to identify whether a body is in a lawn. In this embodiment, the camera 2 is disposed at the front part of the mower 1 in the forward direction, such that the camera 2 can capture photos in front of the mower 1 more clearly and intuitively to improve identification accuracy of the mower 1. Meanwhile, in order to improve the capture accuracy of the camera 2, the camera 2 in this embodiment is rotatable, and the lens 3 of the camera 2 also has corresponding angle changes. The second intersection of the central axis of the lens 3 and the horizontal axis may coincide with the first intersection or be located in the positive direction of the horizontal axis. It may also be understood that an angle α is formed between the central axis of the lens 3 and the vertical line (in this embodiment, all angles are in radians), and the angle α is greater than or equal to 0 and less than π/2. Compared with the situation that the camera 2 can rotate any angle or the camera 2 can only be disposed horizontally (that is, the central axis of the lens 3 is parallel to the horizontal axis) and cannot rotate, the lens 3 of the camera 2 in the present application can rotate a specific angle range, such that the camera 2 can capture, within the angle range, photo information that the mower 1 needs to obtain when working, other unnecessary information in photos is reduced, and the more accurate photo information can reduce operation steps of the mower 1 when processing photos, reduce operation costs, and facilitate the mower 1 to make corresponding actions in time.

In a feasible implementation, the camera 2 may rotate or remain fixed relative to the mower 1. When the mower 1 travels on a flat lawn, the camera 2 may remain fixed relative to the mower 1. In this case, a lawn range of each frame captured by the lens 3 of the camera 2 is approximately the same, so only a most appropriate capture angle needs to be adjusted to enable the mower 1 to obtain a most appropriate field of view. When the mower 1 travels on a sloping or uneven lawn, the camera 2 may be rotated in the traveling process, such that the mower 1 can obtain an appropriate field of view everywhere in the traveling process.

In a feasible implementation, as shown in FIGs. 3-5, a field of view of the lens 3 of the camera 2 has a field angle β in a vertical direction, side lines of the field angle β are constituted by a first field-of-view boundary and a second field-of-view boundary, and the second field-of-view boundary is closer to the mower than the first field-of-view boundary, which may also be understood that the second field-of-view boundary is located in a counterclockwise direction of the first field-of-view boundary when viewed from a left side in the forward direction. The same lens 3 generally has the same field angle β, and different lenses 3 may have different field angles β. When the mower 1 travels on the lawn, the field angle β may affect the field of view of the mower 1, and the lens 3 may be rotated, such that the mower 1 obtains an appropriate field of view. In a feasible implementation, as shown in FIG. 3, a vertical line L is made from the center of the lens 3 to the traveling surface of the mower 1, the vertical line L and the traveling surface intersect at a first intersection O, a horizontal axis is established with the first intersection O as an origin and the forward direction of the mower 1 along the traveling surface as a positive direction, the central axis of the lens 3 and the horizontal axis intersect at a second intersection A, the field of view of the lens 3 of the camera 2 has a field angle β in the vertical direction, side lines of the field angle β are constituted by a first field-of-view boundary and a second field-of-view boundary, and the second field-of-view boundary is closer to the mower than the first field-of-view boundary. The second field-of-view boundary and the horizontal axis intersect at a third intersection S. When the third intersection S is in the positive direction of the horizontal axis, there is a distance OS₁ between the first intersection O and the third intersection S, and an angle α₁ is formed between the central axis and the vertical line L. The distance OS₁ is between 0 mm and 500 mm, and the angle α₁=β/2+arctan(OS₁/H). When the third intersection S is in the positive direction of the horizontal axis, the central axis of the lens 3 is also in the positive direction of the horizontal axis. In this case, the angle α₁ is formed between the central axis of the lens 3 and the vertical line L, the angle α₁ is greater than an angle β/2 between the second field-of-view boundary and the vertical line L, and the distance OS₁ between the first intersection O and the third intersection S is between 0 mm and 500 mm, which can enable the mower 1 to obtain appropriate field changes of view to make corresponding work determinations.

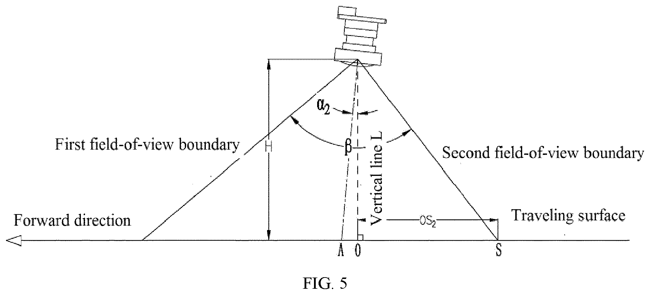

As shown in FIGs. 4 and 5, in a feasible implementation, a vertical line L is made from the center of the lens 3 to the traveling surface of the mower 1, the vertical line L and the traveling surface intersect at a first intersection O, a horizontal axis is established with the first intersection O as an origin and the forward direction of the mower 1 along the traveling surface as a positive direction, the central axis of the lens 3 and the horizontal axis intersect at a second intersection A, the field of view of the lens 3 of the camera 2 has a field angle β in the vertical direction, side lines of the field angle β are constituted by a first field-of-view boundary and a second field-of-view boundary, and the second field-of-view boundary is closer to the mower than the first field-of-view boundary. A height from the center of the lens 3 to the traveling surface is H. When the third intersection S coincides with the first intersection O (as shown in FIG. 4) or the third intersection S is in a negative direction of the horizontal axis (as shown in FIG. 5), there is a distance OS₂ between the first intersection O and the third intersection S, and an angle α₂ is formed between the central axis and the vertical line L. The distance OS₂=tan(β/2-α)^{∗}H(mm), and the angle α₂=β/2-arctan(OS₂/H). The height H from the center of the lens 3 to the traveling surface changes with the rotation of the lens 3. When the central axis of the lens 3 coincides with the vertical line L, OS₂ has a maximum length OS₂=tan(β/2)^{∗}H(mm), and α₂=0. When the second field-of-view boundary of the lens 3 coincides with the vertical line L, α=β/2, OS₂ has a minimum length OS₂=0, and α₂=β/2. When the third intersection S is in the negative direction of the horizontal axis or the third intersection S coincides with the first intersection O, a value range of OS₂ is greater than or equal to 0 and less than or equal to tan(β/2)^{∗}H(mm), and correspondingly, a value range of α₂ is less than or equal to β/ 2 and greater than or equal to 0, where a value of H may change with the rotation of the lens 3, and a value of β also depends on the characteristics of the lens 3.

As shown in FIG. 2, the mower 1 further includes a mower housing 5 and a controller (not shown), where the controller is disposed in the mower housing 5 and can control the rotation of the camera 2. It should be noted here that the controller may control the rotation of the camera 2 alone, and may also control the rotation of the camera 2 and the traveling of the mower 1 simultaneously. When the controller controls the rotation of the camera 2 alone, the controller may be connected with camera 2 to form a part of a camera module, which is located at the front part of the mower 1. When the controller may control the rotation of the camera 2 and the traveling of the mower 1 simultaneously, it may be understood that a controller that controls the rotation of the camera 2 and a controller that controls the traveling of the mower 1 are integrated. When the mower 1 is working, in a possible implementation, the camera 2 of the mower 1 may be manually rotated, such that the camera 2 obtains an appropriate field of view. In another possible implementation, a controller is disposed in the mower housing. The controller may be disposed in the mower housing 5 and may be used to control the rotation of the camera 2. The controller may drive the rotation of the camera 2 by controlling the camera mounting structure 4, or the controller may directly control the rotation of the camera 2, as long as the camera 2 may rotate under the control of the controller. During the operation of the mower 1, the controller may determine a real-time environment of the mower 1 according to photos captured and returned by the camera 2 of the mower 1, so as to control the rotation of the camera 2 and enable the mower 1 to obtain an appropriate field of view.

A battery pack 6 is disposed in the mower housing 5. The battery pack 6 is located at the rear part of the mower 1 in the forward direction and is used for providing a power source for the mower 1. The mower 1 may be rechargeable, and the battery pack 6 may store power. When the power in the battery pack 6 is insufficient, the battery pack 6 may be charged after an external lead of the mower 1 is connected to a power supply, so as to provide the power source for the mower 1. The mower 1 further includes a motor 7 and a mowing blade 8, the motor 7 is disposed in the mower housing 5, the mowing blade 8 is disposed at the bottom of the mower 1, and the motor 7 is used for driving the mowing blade 10 to rotate. In a possible implementation, the mowing blade 8 may be sleeved on a motor shaft of the motor 7, the mowing blade 8 can rotate with the rotation of the motor shaft of the motor 7, and a rotation speed of the mowing blade 8 may be the same as that of the motor shaft.

As shown in FIG. 2, in a possible implementation, the mower further includes a driving traveling wheel 9 and a driven traveling wheel 10, the driving traveling wheel 9 is located at the rear part of the mower 1 in the forward direction, the driven traveling wheel is located at the front part of the mower 1 in the forward direction, and under a driving action of the driving traveling wheel 9, the mower 1 travels on the traveling surface and drives the driven traveling wheel 10 to rotate. As a power driving wheel, the driving traveling wheel 9 may drive the mower 1 to move forward or backward or stop suddenly on the traveling surface when the mower 1 processes the photos captured by the camera 2 and needs to make corresponding actions, so as to drive the driven traveling wheel 10 to act.

The technical features of the foregoing embodiments may be combined arbitrarily. For the purpose of simplicity in description, all possible combinations of the technical features in the foregoing embodiments are not described. However, as long as the combinations of these technical features do not have contradictions, they shall fall within the scope of the description.

The foregoing embodiments only describe several implementations of the present invention, and their descriptions are specific and detailed, but cannot therefore be understood as limitations to the patent scope of the present invention. It should be noted that those of ordinary skill in the art may further make variations and improvements without departing from the conception of the present invention, and these all fall within the protection scope of the present invention. Therefore, the protection scope of the present invention shall be subject to the appended claims.

## Claims

1. A mowing device, wherein the mowing device comprises a mower and a camera, the camera is located at the front part of the mower in the forward direction, and the camera comprises a lens; and
a vertical line is made from the center of the lens to a traveling surface of the mower, the vertical line and the traveling surface intersect at a first intersection, a horizontal axis is established with the first intersection as an origin and the forward direction of the mower along the traveling surface as a positive direction, a central axis of the lens and the horizontal axis intersect at a second intersection, and the second intersection is in the positive direction of the horizontal axis or coincides with the first intersection.

2. The mowing device according to claim 1, wherein the camera is rotatable or remains fixed relative to the mower.

3. The mowing device according to claim 1, wherein a field of view of the lens of the camera has a field angle β in a vertical direction, side lines of the field angle β are constituted by a first field-of-view boundary and a second field-of-view boundary, and the second field-of-view boundary is closer to the mower than the first field-of-view boundary; and
the second field-of-view boundary and the horizontal axis intersect at a third intersection, and when the third intersection is in the positive direction of the horizontal axis, there is a distance between the first intersection and the third intersection.

4. The mowing device according to claim 3, wherein the distance is between 0 mm and 500 mm.

5. The mowing device according to claim 1, wherein the mowing device further comprises a camera mounting structure, and the camera is connected with the mower by the camera mounting structure.

6. The mowing device according to claim 5, wherein the mower comprises a mower housing and a controller, and the controller is disposed in the mower housing and is capable of controlling rotation of the camera.

7. The mowing device according to claim 6, wherein a battery pack is further disposed in the mower housing, and the battery pack is located at the rear part of the mower in the forward direction and is used for providing a power source for the mower.

8. The mowing device according to claim 7, wherein the mower further comprises a motor and a mowing blade, the motor is disposed in the mower housing, the mowing blade is disposed at the bottom of the mower, and the motor is used for driving the mowing blade to rotate.

9. The mowing device according to claim 8, wherein the mower further comprises a driving traveling wheel and a driven traveling wheel, the driving traveling wheel is located at the rear part of the mower in the forward direction, the driven traveling wheel is located at the front part of the mower in the forward direction, and under a driving action of the driving traveling wheel, the mower travels on the traveling surface and drives the driven traveling wheel to rotate.
